# EUROPEAN PATENT APPLICATION

(11) **EP 2 283 727 A2**
(43) Date of publication of application: **16.02.2011**
(21) Application number: 10169908.0
(22) Date of filing: 16.07.2010
(51) Int. Cl.: A01N 27/00, A01P 21/00

(54) **Treatment of ornamental plants**

(30) Priority: 06.08.2009 US 273583 P
(71) Applicant: Rohm and Haas Company, Philadelphia, Pennsylvania 19106-2399 (US)
(72) Inventor: Daly, James, Cottageville, SC 29435 (US); Legnani, Garry, Kent, OH 44240 (US); Holcroft, Deidre, Margaret, Davis, CA 95618 (US); Ranwala, Anil, P., Summerville, SC 29485 (US)
(74) Representative: Buckley, Guy Julian

(57) **Abstract**

In a first aspect of the present invention, there is provided a method of treating ornamental plants comprising contacting said plants with a liquid composition comprising of one or more cyclopropene compound, wherein the concentration of the total of all of said one or more cyclopropene compound is 0.3 to 300 milligrams of cyclopropene compound per liter of said liquid composition.

## Description

### BACKGROUND:

It is often desirable to prolong the life of ornamental plants. It is also often desirable to improve the general vitality of ornamental plants.

US 2005/0261132 describes contacting plants or plant parts with a composition containing a cyclopropene and a metal-complexing agent. US 2005/0261132 does not address the problem of how to treat ornamental plants in a way that will prolong their lives. One object of the present invention is to provide a method of treating ornamental plants to prolong their lives, for example by delaying one or more of the following: degradation of appearance, onset of flower abscission, onset of bud abscission, onset of flower wilting, onset of bud wilting, or any combination thereof. Another object of the present invention is to provide a method of treating ornamental plants to improve their general vitality.

### STATEMENT OF THE INVENTION:

In a first aspect of the present invention, there is provided a method of treating ornamental plants comprising contacting said plants with a liquid composition comprising of one or more cyclopropene compound, wherein the concentration of the total of all of said one or more cyclopropene compound is 0.3 to 300 milligrams of cyclopropene compound per liter of said liquid composition.

### DETAILED DESCRIPTION:

The present invention involves the use of one or more cyclopropene compound. As used herein a cyclopropene compound is any compound with the formula 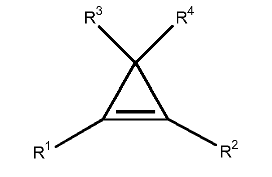 where each R¹, R², R³ and R⁴ is independently selected from the group consisting of H and a chemical group of the formula:

-(L)ₙ-Z

where n is an integer from 0 to 12. Each L is a bivalent radical. Suitable L groups include, for example, radicals containing one or more atoms selected from H, B, C, N, O, P, S, Si, or mixtures thereof. The atoms within an L group may be connected to each other by single bonds, double bonds, triple bonds, or mixtures thereof. Each L group may be linear, branched, cyclic, or a combination thereof. In any one R group (i.e., any one of R¹, R², R³ and R⁴) the total number of heteroatoms (i.e., atoms that are neither H nor C) is from 0 to 6.

Independently, in any one R group the total number of non-hydrogen atoms is 50 or less.

Each Z is a monovalent radical. Each Z is independently selected from the group consisting of hydrogen, halo, cyano, nitro, nitroso, azido, chlorate, bromate, iodate, isocyanato, isocyanido, isothiocyanato, pentafluorothio, and a chemical group G, wherein G is a 3 to 14 membered ring system.

Ring systems suitable as chemical group G may be substituted or unsubstituted; they may be aromatic (including, for example, phenyl and napthyl) or aliphatic (including unsaturated aliphatic, partially saturated aliphatic, or saturated aliphatic); and they may be carbocyclic or heterocyclic.

The R¹, R², R³, and R⁴ groups are independently selected from the suitable groups. The R¹, R², R³, and R⁴ groups may be the same as each other, or any number of them may be different from the others. Groups that are suitable for use as one or more of R¹, R², R³, and R⁴ may be connected directly to the cyclopropene ring or may be connected to the cyclopropene ring through an intervening group such as, for example, a heteroatom-containing group.

As used herein, a chemical group of interest is said to be "substituted" if one or more hydrogen atoms of the chemical group of interest is replaced by a substituent. Suitable substituents include, for example, alkyl, alkenyl, acetylamino, alkoxy, alkoxyalkoxy, alkoxycarbonyl, alkoxyimino, carboxy, halo, haloalkoxy, hydroxy, alkylsulfonyl, alkylthio, trialkylsilyl, dialkylamino, and combinations thereof. An additional suitable substituent, which, if present, may be present alone or in combination with another suitable substituent, is

-(L)ₘ-Z

where m is 0 to 8, and where L and Z are defined herein above. If more than one substituent is present on a single chemical group of interest, each substituent may replace a different hydrogen atom, or one substituent may be attached to another substituent, which in turn is attached to the chemical group of interest, or a combination thereof.

Among the suitable R¹, R², R³, and R⁴ groups are, for example, substituted and unsubstituted versions of any one of the following groups: aliphatic, aliphatic-oxy, alkylcarbonyl, alkylphosphonato, alkylphosphato, alkylamino, alkylsulfonyl, alkylcarboxyl, alkylaminosulfonyl, cycloalkylsulfonyl, cycloalkylamino, heterocyclyl (i.e., aromatic or non-aromatic cyclic groups with at least one heteroatom in the ring), aryl, hydrogen, fluoro, chloro, bromo, iodo, cyano, nitro, nitroso, azido, chlorato, bromato, iodato, isocyanato, isocyanido, isothiocyanato, pentafluorothio; acetoxy, carboethoxy, cyanato, nitrato, nitrito, perchlorato, allenyl; butylmercapto, diethylphosphonato, dimethylphenylsilyl, isoquinolyl, mercapto, naphthyl, phenoxy, phenyl, piperidino, pyridyl, quinolyl, triethylsilyl, and trimethylsilyl.

Among the suitable R¹, R², R³, and R⁴ groups are those that contain one or more ionizable substituent groups. Such ionizable groups may be in non-ionized form or in salt form.

Also contemplated are embodiments in which R³ and R⁴ are combined into a single group, which is attached to the number 3 carbon atom of the cyclopropene ring by a double bond. Some of such compounds are described in US Patent Publication 2005/0288189.

In some embodiments, one or more cyclopropenes are used in which one or more of R¹, R², R³, and R⁴ is hydrogen. In some embodiments, each of R¹, R² R³, and R⁴ is hydrogen or methyl. In some embodiments, R¹ is (C₁-C₄) alkyl and each of R², R³, and R⁴ is hydrogen. In some embodiments, R¹ is methyl and each of R², R³, and R⁴ is hydrogen, and the cyclopropene compound is known herein as "1-MCP."

In some embodiments, a cyclopropene compound is used that has boiling point at one atmosphere pressure of 50°C or lower; or 25°C or lower; or 15°C or lower. Independently, in some embodiments, a cyclopropene compound is used that has boiling point at one atmosphere pressure of-100°C or higher; -50°C or higher; or -25°C or higher; or 0°C or higher.

The practice of the present invention involves a composition (herein called the "CP composition") that contains one or more cyclopropene compound. In some embodiments, the CP composition includes one or more molecular encapsulating agent. Suitable molecular encapsulating agents include, for example, organic and inorganic molecular encapsulating agents. Suitable organic molecular encapsulating agents include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. In some embodiments of the invention, the encapsulating agent is alpha-cyclodextrin, beta-cyclodextrin, gamma-cyclodextrin, or a mixture thereof. In some embodiments of the invention, particularly when the cyclopropene compound is 1-methylcyclopropene, the encapsulating agent is alpha-cyclodextrin. The preferred encapsulating agent will vary depending upon the structure of the cyclopropene compound or cyclopropene compounds being used. Any cyclodextrin or mixture of cyclodextrins, cyclodextrin polymers, modified cyclodextrins, or mixtures thereof can also be utilized pursuant to the present invention. Some cyclodextrins are available, for example, from Wacker Biochem Inc., Adrian, MI, as well as other vendors.

In some embodiments, at least one molecular encapsulating agent encapsulates one or more cyclopropene compounds. A cyclopropene compound or substituted cyclopropene compound molecule encapsulated in a molecule of a molecular encapsulating agent is known herein as a "cyclopropene compound molecular encapsulating agent complex." The cyclopropene compound molecular encapsulation agent complexes can be prepared by any means. In one method of preparation, for example, such complexes are prepared by contacting the cyclopropene compound with a solution or slurry of the molecular encapsulation agent and then isolating the complex, using, for example, processes disclosed in US Patent No. 6,017,849.

While the present invention is not limited by theory, among at least some of the embodiments in which the CP composition is aqueous and in which a molecular encapsulating agent encapsulates a cyclopropene compound, it is contemplated that the encapsulation complex is stabilized by hydrophobic interactions. That is, in such embodiments, it is contemplated that that particular cyclopropene compound is relatively non-polar and is poorly soluble in water, while the molecular encapsulating agent is a molecule with a relatively non-polar interior cavity and a relatively hydrophilic exterior. In such embodiments, it is contemplated that the cyclopropene compound finds an energetically favorable environment on the interior cavity of the molecular encapsulating agent.

The amount of molecular encapsulating agent, when present, can usefully be characterized by the ratio of moles of molecular encapsulating agent to moles of cyclopropene compound (i.e., the number that results when the number of moles of molecular encapsulating agent is divided by the number of moles of cyclopropene compound). In some embodiments, the ratio of moles of molecular encapsulating agent to moles of cyclopropene compound is 0.1 or larger; or 0.2 or larger; or 0.5 or larger; or 0.9 or larger. Independently, in some of such embodiments, the ratio of moles of molecular encapsulating agent to moles of cyclopropene compound is 2 or lower; or 1.5 or lower. In some embodiments, the ratio of moles of molecular encapsulating agent to moles of cyclopropene compound is 0.9 to 1.5.

In some embodiments, the CP composition contains one or more chelating agent. A chelating agent is a compound that has at least two atoms or groups, each of which is capable of forming a coordinate bond with a metal atom, and a single molecule of a chelating agent is capable of forming two or more coordinate bonds with a single metal atom.

In embodiments in which one or more chelating agent is used, suitable chelating agents include, for example, organic and inorganic chelating agents. In some embodiments a chelating agent is used that is a phosphate such as, for example, tetrasodium pyrophosphate, sodium tripolyphosphate, or hexametaphosphoric acid. In some embodiments a chelating agent is used that is chosen from aminocarboxylic acids, 1,3-diketones, hydroxycarboxylic acids, polyamines, aminoalcohols, aromatic heterocyclic bases, phenols, aminophenols, oximes, Shiff bases, sulfur compounds, or mixtures thereof. In some embodiments, a chelating agent is used that is chosen from one or more aminocarboxylic acids, one or more hydroxycarboxylic acids, one or more oximes, or a mixture thereof. In some embodiments, a chelating agent is used that includes ethylenediaminetetraacetic acid (EDTA), hydroxyethylethylenediaminetriacetic acid (HEDTA), nitrilotriacetic acid (NTA), N-dihydroxyethylglycine (2-HxG), ethylenebis(hydroxyphenylglycine) (EHPG), or a mixture thereof. In some embodiments a chelating agent is used that includes tartaric acid, citric acid, gluconic acid, 5-sulfoslicylic acid, or a mixture thereof. In some embodiments a chelating agent is used that includes dimethylglyoxime, salicylaldoxime, or a mixture thereof. In some embodiments, EDTA is used.

Among embodiments in which a chelating agent is used that is an acid, the acid may be present in neutral form or in the form of a salt or in a combination thereof. Salts may have any counterion, including, for example, sodium, potassium, magnesium, calcium, or mixtures thereof. In some embodiments, magnesium or calcium or a mixture thereof is used.

Mixtures of suitable chelating agents are also suitable.

Among embodiments in which a chelating agent is used, the amount of chelating agent is, based on the total weight of the CP composition, 10% by weight or less; or 8% by weight or less; or 6% by weight or less. Independently, in some embodiments, the amount of metal-complexing agent is, based on the total weight of the CP composition, 0.1 % or more; or 0.2% or more; or 0.5% or more. In some embodiments, the amount of metal-complexing agent is, based on the total weight of the CP composition, 0.5% to 6%.

The present invention involves treatment of ornamental plants. As used herein, "ornamental plants" are living plants, rooted in soil, that have commercial value for their aesthetic appeal. Some ornamental plants have additional value as crop plants because they produce a crop (i.e., one or more product or one or more plant part) that may be harvested and that has commercial value. In some embodiments, one or more ornamental plant is chosen because of the aesthetic appeal of one or more of its flowers, leaves, scent, fruit, stems, bark, or combination thereof.

In some embodiments, one or more ornamental plant is chosen for its appearance. Of those, some (herein called "ornamental flower plants") are chosen for the appearance of their flowers.

In some embodiments, ornamental plants are chosen from the following: Acacia, Achillea, African Boxwood, African Lily, African Violet, Agapanthus, Ageratum, Ageratum houstonim, Allium, Alpina, Alstroemeria, Amaranthus hypochondriacus, Amaryllis, Ammi majus, Anconitum, Anemone, Anigozanthus, Annual Delphinium, Anthurium, Antirrhinum majus, Asparagus, Aster, Aster spp., Astilbe, Azalea, Baby's Breath, Bachelor's Button, Banksia, Begonia, Bellflower, Bells of Ireland, Big Flax, Billy Buttons, Blazing Star, Bleeding Heart, Boronia, Bouvardia, Broom, Buddleia, Bupleurum, Butterfly Bush, Butterfly Orchid, California Pepperberry, Calla Lily, Campanul, Candytuft, Canterbury Bells, Carnation, Carthamus, Caspia, Cattleya, Celosia, Celosia argenta, Centaurea cyanus, Chamelaucium, Chimney Bells, Chrysanthemum, Chrysanthemum x morifolium, Clarkia, Consolida ambigua, Convallaria, Coral Bell, Cordyline, Coreopsis, Cornflower, Craspedia, Curly Willow, Cyclamen, Cymbidium, Cymbidium Orchid, Daffodil, Daisy, Daisy Mums, Daylily, Delphinium, Dendrobium, Dendrobium Orchid, Dianthus barbatus, Dianthus caryophyllus, Dianthus caryophyllus nana, Dragon's Tongue, Drumstick, Enthusiasm, Erica spp, Eustoma grandiflorum, False Bird of Paradise, False Spirea, Farewell-To-Spring, Flamingo Flower, Floss Flower, Freesia, Freesia x hybrida, Fuji or spider Mums, Gay Feather, Genista spp., Geranium, Gerbera, Gerbera spp., Ginger, Gladiolus, Gladiolus hybrid nanus, Goat's Beard, Godetia, Golden Rod, Guersney Lily, Gyp, Gypsophila paniculata, Hanging Helicona, Heath, Heather, Helianthus annuus, Heliconia spp., Hippeastrum, Hosta, Hydrangea, Iberis amara, Impatiens, Inca Lily, Iris, Iris spp., Ivory Lily, Jade plant, Japhette Orchid, Jonquil, Kalanchoe, Kangaroo Paw, napweed, Larkspur, Lathyrus odoratus, Lavandula, Lavender, Liatris, Lilac, Lilium spp., Lilly-of-the-Valley, Lily, Lily of the Field, Lily of the Nile, Limonium, Limonium spp., Lisianthus, Lobster Claw, Love in the mist, Love-lies-bleeding, Mattholia incana, Memosa, Minature Carnation, Mini Carnation, Miniature Gladiolus, Moluccella laevis, Monkshood, Mother-in-law tongue, Musa, Myrsine, Myrtle, Myrtus, Narcissus, Nephrolepis, Nerine, Nerine Lily, Nigella, Orchid, Ornamental Onion, Ornithogalum, Paeonia, Painted Tongue, Peony, Peruvian lily, Petunia, Phalaenopsis, Philodendron, Phlox, Pincushion Flower, Pitt, Pittosporum, Pixie Carnation, Pointsettia, Polianthes tuberosa, Pompon Chrysanthemum, Poppy Anemone, Porium, Protea spp., Purple Coneflower, Pussy Willow, Queen Ann's Lace, Ranunculus, Rattlesnake, Red Ribbons, Rosa spp., Rose, Rudbeckia, Safflower, Salix, Salvia, Sansevieria, Satin Flowers, Scabiosa, Schinus, Sea lavender, Sedum, Shell Flowers, Snake Plant, Snapdragon, Solidago, Solidaster spp., Speedwell, Spider Lily, Spider Mums, Spray Carnation, Star of Bethlehem, Statice, Stenamezon, Stock, Summer's Darling, Sunflower, Sweet Pea, Sweet William, Sword Fern, Syringa vulgaris, Tailflowers, Tassel flower, Thouroughwax, Throatwort, Trachelium, Tree Fern, Trumpet Lily, Tuberose, Tulip, Tulipa, Veronica, Wattle, Waxftower, Wild Plantain, Windflower, Wolfsbane, Youth and Old Age, Zantedeschia, Zinna, Zinnia elegans, Zygocactus, and mixtures thereof.

In some embodiments, the plants treated in the practice of the present invention include one or more ornamental flower plant that is in bloom at the time of the treatment. In some of such embodiments, the life of the flower will be extended, or the vitality of the plant will be improved, or both. When improvement in vitality occurs, it may occur immediately after treatment, or it may be observed later, possibly after the flowers have dropped off the plant, and/or possibly 4 weeks later.

In the practice of the present invention, plants are treated when they are rooted in growing medium. Growing medium may be natural or artificial or a mixture thereof. Suitable growing media include, for example, soil, artificial growing media, and mixtures thereof. Artificial growing media may contain organic components or mineral components or both. Artificial growing media may be solid or liquid (i.e., hydroponic growing media) or a combination thereof. Some suitable growing media include, for example, compost (for example, composted yard waste), peat moss, pine bark, perlite, sand, vermiculite, coir, rockwool, foam, or any combination thereof. In some embodiments, the growing medium is soil.

In the practice of the present invention, ornamental plants may be treated in any location. In some embodiments, ornamental plants are treated outside of any building or enclosure. In other embodiments, ornamental plants are treated inside an enclosure such as, for example, a greenhouse, another building, a shipping container, or a truck.

Independently, ornamental plants may be treated when the growing medium in which they are rooted is in any configuration. In some embodiments, the growing medium is in the ground, for example in level ground or in a raised bed or in a combination thereof. In some embodiments, the growing medium is in containers, such as, for example, pots, flats, some other container, or a combination thereof. In some embodiments, the growing medium in each container has depth of 80 cm or less. In some embodiments, the growing medium in each container has depth of 50 cm or less, or 25 cm or less, or 15 cm or less. In some embodiments, the growing medium is sufficiently rigid that no container is needed. Such rigid growing media include, for example, foam (such as, for example, Oasis^{™} growing media) or rockwool or a combination thereof.

It is contemplated that ornamental plants that are rooted in growing medium that is in the form of an item of rigid growing medium or that is in pot or a flat will be portable. Usually, such a pot, flat, or item of rigid growing medium can be lifted and carried by an individual person.

In some embodiments, the plants treated in the practice of the present invention include one or more flowering bedding plants, which are treated in flats or pots and which are subsequently planted in soil in the ground by the consumer. In some embodiments, the plants treated in the practice of the present invention include one or more foliage plants, which are plants that are normally valued for the appearance of their foliage and not for their flowers. In some embodiments, the plants treated in the practice of the present invention include one or more flowering pot plants, which are in pots when treated and which normally remain in pots after purchase by the consumer. In some embodiments, the plants treated in the practice of the present invention include one or more nursery crops, which include, for example, annual plants, biennial plants, and perennial plants, which are treated in pots or flats and subsequently planted in the ground by the consumer. In some embodiments, the plants treated in the practice of the present invention include turf grass. In some embodiments, the plants treated in the practice of the present invention include one or more flowering bedding plants, one or more foliage plants, one or more flowering pot plants, one or more nursery crops, turf grass, or a combination thereof.

A composition is considered herein to be liquid if it is in the liquid state at pressure of one atmosphere over a temperature range that includes 10°C to 30°C.

A composition is considered herein to be "aqueous" if it contains 50% or more water by weight, based on the weight of the composition.

The practice of the present invention involves the use of a liquid CP composition. In some embodiments, that liquid CP composition is an aqueous composition. In some embodiments, that liquid CP composition contains water in an amount by weight based on the weight of the liquid CP composition, of 75% or more, or 85% or more, or 90% or more, or 95% or more.

As used herein, the phrase "cyclopropene compound in the amount of" is considered to mean, if more than one cyclopropene compound is present, that the sum of all cyclopropene compounds is present in that amount.

The liquid CP composition contains cyclopropene compound in the amount of 0.3 to 300 milligrams of cyclopropene per liter of the liquid CP composition. In some embodiments, the liquid CP composition compound contains cyclopropene compound in the amount of (in milligrams of cyclopropene per liter of liquid CP composition) 0.5 or more; or 1 or more, or 2 or more; or 5 or more; or 10 or more. Independently, in some embodiments, the liquid CP composition contains cyclopropene compound in the amount of (in milligrams of cyclopropene per liter of liquid CP composition) 250 or less; or 200 or less; or 150 or less; or 100 or less; or 90 or less; or 50 or less. In some embodiments, the liquid CP composition contains cyclopropene compound in the amount of 5 to 50 milligrams of cyclopropene per liter of liquid CP composition.

In some embodiments, the ingredients other than water in an aqueous CP liquid composition are distributed throughout the water. Each ingredient other than water, independent of other ingredients, may be dissolved in the water or dispersed in the water or emulsified in the water, or any combination thereof.

It is sometimes desirable to include in the CP composition one or more adjuvants, such as, for example, extenders, pigments, fillers, binders, plasticizers, lubricants, surfactants, wetting agents, spreading agents, dispersing agents, stickers, adhesives, defoamers, thickeners, transport agents, and emulsifying agents.

Independently, in some embodiments, the CP composition includes one or more alkyl alcohols. In some embodiments, the CP composition includes one or more alkyl alcohols where the alkyl group has 6 or fewer carbon atoms, or 3 or fewer carbon atoms.

In some embodiments, one or more surfactant is used. Suitable surfactants include, for example, anionic surfactants, cationic surfactants, nonionic surfactants, amphoteric surfactants, and mixtures thereof. In some embodiments, one or more nonionic surfactant is used. Some suitable nonionic surfactants are, for example, alkylphenol ethoxylates and silicone surfactants. In some embodiments, a silicone surfactant is used. In some embodiments, a trisiloxane alkoxylate is used. One suitable trisiloxane alkoxylate is, for example, Poly(oxy-1,2-ethanediyl), alphamethyl-omega-(3-(1,3,3,3-tetramethyl-1-((trimethylsilyl)oxy)-1-disiloxanyl)propoxy)- (registry number 27306-78-1), available as Silwet^{™} L-77 from GE silicones. Mixtures of suitable surfactants are also suitable.

Among embodiments that use surfactant, some embodiments use surfactant in amounts, by weight based on the total weight of the liquid CP composition, of 0.005% or more; or 0.01 % or more. Independently, among embodiments that use surfactant, some embodiments use surfactant in amounts, by weight based on the total weight of the liquid CP composition, of 1% or less; or 0.3% or less; or 0.1 % or less. In some embodiments, surfactant is used in an amount of 0.01 % to 0.1 % by weight based on the total weight of the liquid CP composition.

In the practice of the present invention, liquid CP composition is brought into contact with plants. The bringing into contact may be performed by any method, including, for example, spraying, dipping, misting, or any combination thereof. In some embodiments, spraying is used.

The amount of liquid CP composition used may be characterized as the volume of liquid CP composition in milliliters divided by the area in square meters to which the liquid CP composition is applied. When the plants being brought into contact with liquid CP composition are in pots or flats or other containers, the area used to calculate the amount of liquid CP composition used is the total area of the shape formed by the perimeter surrounding the containers, including any empty space between the containers.

In some embodiments, the amount of liquid CP composition used is 20 ml/m² or more; or 50 ml/m² or more; or 100 ml/m² or more. Independently, in some embodiments, the amount of liquid CP composition used is 2000 ml/m² or less; or 1000 ml/m² or less; or 500 ml/m² or less. In some embodiments, the amount of liquid CP composition used is 100 ml/m² to 500 ml/m².

It is to be understood that for purposes of the present specification and claims that each operation disclosed herein is performed at 25°C unless otherwise specified.

### EXAMPLES

### Methods

Spray applications were made using (unless otherwise noted) AFxRD-038 powder containing 3.8% active ingredient, i.e. 1-MCP, and also containing dextrose, alpha-cyclodextrin, and amino acid salt. Rates listed are for active ingredient e.g. 5 mg active ingredient per liter. Sprayed liquid contained (unless otherwise noted) AFxRD-038 powder added to water. AFxRD-038 powder was obtained from AgroFresh Inc. The water used (unless otherwise noted) was tap water. Applications were done in 500 ml spray bottles at rates typical for growth regulators applications in the ornamental industry i.e., 200 ml per square meter. Spraying was done within 5-15 minutes of mixing the formulation. Plants were allowed to dry for 1- 4 hours before being challenged with ethylene (2 ppm for about 16 hours at ambient temperatures).

"Ambient temperatures" means herein 15°C to 28°C.

Surfactant Silwet^{™} L-77 (called "surf" below) was sometimes included to evaluate the effect of surfactant on efficacy. Silwet^{™} L-77 was used in the form of a pure liquid. The amounts shown below as "ml/L" refer to milliliters of pure Silwet^{™} L-77 per liter of liquid CP composition.

Plants tested included bedding plants ( i.e. flowering plants grown in a six pack tray) or flowering potted plants. Multiple identical plants were tested in each example below. Where measurements are marked with a lower-case letter or letters (e.g., "a" or "ab"), those letters denote the results of statistical analysis on the results. For example, in the "Day 9" results in Example 6, the results at 0 mg/L of 1-MCP (letter "a") are statistically different from the results at 5 and 10 mg/L (letters "b, c, d, and/or e" but no letter "a").

### Example 1

Visual appearance and flower or bud abscission of Impatiens (unknown cultivar in pots with diameter of 10 cm (4 inch)) and Cyclamen plants (unknown cultivar in pots of diameter 11.5 cm (4.5 inch)) sprayed with 1-MCP solutions and challenged with ethylene.

| | Impatiens | | Cyclamen | |
|---|---|---|---|---|
| | Appearance⁽¹⁾ | | Appearance⁽²⁾ | Abscission (%) |
| 1-MCP (mg/L) | Day 1 | Day 4 | Day 7 | Day 7 |
| 0 | 0.7 d | 0.3 b | 1.0 b | 89.7 a |
| 10 | 3.7 ab | 3.3 a | 3.7 a | 25.6 b |
| 15 | nt | nt | 3.7 a | 23.3 b |
| 25 | nt | nt | 3.7 a | 25.0 b |
| 100 | 4.3 a | 3.7 a | nt | nt |
| 300 | 2.3 be | 1.3 be | nt | nt |

| | | | | |
|---|---|---|---|---|
| Note 1: 0=poor; 5=excellent Note 2: 1 =poor; 5=excellent The treatment at 300 mg/L caused phytotoxicity on Impatiens. | | | | |

### Example 2

Kalanchoe (unknown cultivar), 'Candy Stripe' phlox and 'Sonnet' snapdragon (all in pots of diameter 10 cm (4 inch)) were sprayed with 1-MCP solutions, with or without Silwet^{™} L-77 surfactant (specific gravity 1.007), and challenged with ethylene.

For Kanlanchoe, we observed the percent of plants on which one or more flowers died by wilting, whether or not it stayed on the plant. For Phlox and Snapdragon, we observed the percent of plants on which one or more flowers or one or more buds underwent abscission.

| 1-MCP (mg/L) | surf (ml/L) | Kalanchoe | | Phlox | Snapdragon |
|---|---|---|---|---|---|
| | | Flower Wilting (%) | | Bud or Flower Abscission (%) | |
| | | Day 5 | Day 15 | Day 5 | Day 5 |
| 0 | 0 | 58.7 a | 38.8 a | 94.7 a | 70.1 a |
| 0 | 0.25 | 46.0 a | 32.7 a | 96.1 a | 70.1 a |
| 5 | 0 | 7.9 b | 11.9 b | 21.4 c | 19.9 b |
| 5 | 0.25 | 7.3 b | 8.7 b | 26.0 bc | 0.0 b |
| 10 | 0 | 5.6 b | 6.7 b | 17.3 c | 4.4 b |
| 10 | 0.25 | 5.5 b | 6.8 b | 22.8 bc | 3.3 b |
| 25 | 0 | 4.6 b | 7.2 b | 15.8 c | 7.4 b |
| 25 | 0.25 | 6.2 b | 7.4 b | 21.2 c | 3.3 b |
| 50 | 0 | 6.7 b | 7.5 b | 44.1 b | 6.4 b |
| 50 | 0.25 | 5.7 b | 6.7 b | 40.0 bc | 8.9 b |

The rate of 1-MCP of 5 mg/L was sufficient in giving protection against ethylene. The 1-MCP rate of 50 mg/L did not result in any phytotoxicity on Kalanchoe or snapdragon flowers but on Phlox and Snapdragon the highest rates caused phytotoxicity to the open florets.

### Example 3

Bud wilting and flower abscission (%) of Campanula (in pots) sprayed with 1-MCP solutions without a surfactant, and challenged with ethylene. We observed the percent of plants on which one or more buds or one or more flowers underwent wilting or abscission or both.

| | Bud Wilting and/or Flower Abscission (%) | |
|---|---|---|
| 1-MCP (mg/L) | Day 1 | Day 7 |
| 0 | 96 | 30 |
| 5 | 21 | 25 |
| 10 | 45 | 52 |
| 25 | 38 | 59 |
| 50 | 38 | 57 |

At 0 1-MCP, the reason for the lower percentage of bud abscission on day 7 compared to day 1 is the regrowth of buds.

### Example 4

Flower loss (%) on Regal Geranium cultivars, 'Camelot' and 'Jewel' (in pots), sprayed with 1-MCP solutions with or without surfactant (Silwet^{™} L-77) and challenged with ethylene.

| | | Flower Loss (%) | | | | | | | |
|---|---|---|---|---|---|---|---|---|---|
| 1-MCP (mg/L) | surf. (ml/L) | "Camelot" | | "Camelot" | | "Jewel" | | "Jewel" | |
| | | Day 1 | Day 2 | Day 1 | Day 7 | Day 1 | Day 2 | Day 1 | Day 7 |
| 0 | 0 | 100 | 100 | 95 | 62 | 100 | 100 | 100 | 78 |
| 5 | 0 | 45 | 64 | 62 | 46 | 84 | 100 | 90 | 76 |
| 5 | 2 | 5⁽³⁾ | 24⁽³⁾ | nt | nt | 65⁽³⁾ | 100⁽³⁾ | nt | nt |
| 10 | 0 | nt | nt | 20 | 0 | nt | nt | 85 | 68 |
| 25 | 0 | nt | nt | 28 | 27 | nt | nt | 52 | 43 |
| 50 | 0 | 0⁽³⁾ | 0⁽³⁾ | 0⁽³⁾ | 48⁽³⁾ | 28⁽³⁾ | 82⁽³⁾ | 26⁽³⁾ | 65⁽³⁾ |
| 50 | 2 | 5⁽³⁾ | 44⁽³⁾ | nt | nt | 35⁽³⁾ | 81⁽³⁾ | nt | nt |

| | | | | | | | | | |
|---|---|---|---|---|---|---|---|---|---|
| Note 3: phytotoxicity was observed | | | | | | | | | |

### Example 5

Bud wilting and flower abscission (i.e., % of plants that showed bud wilting or flower abscission or both) of 'Magenta' Impatiens (in pots) sprayed with 1-MCP solutions with 0.25 mL/L Silwet^{™} L-77 surfactant and challenged with ethylene.

| 1-MCP (mg/L) | surf. (ml/L) | Wilt and/or Abscission (%) |
|---|---|---|
| 0 | 0.25 | 65 |
| 5 | 0.25 | 3 |
| 10 | 0.25 | 2 |
| 25 | 0.25 | 5 |
| 50 | 0.25 | 0 |

No phytotoxicity was observed on 'Magenta' impatiens even at the highest rates with Silwet^{™} L-77.

### Example 6

Bud wilting (%) of Petunia (in six-pack trays) sprayed with 1-MCP solutions with or without Silwet^{™} L-77 surfactant and challenged with ethylene.

| 1-MCP (mg/L) | surf (mL) | Bud Wilting (%) | |
|---|---|---|---|
| | | Day 5 | Day 9 |
| 0 | 0 | 91 ab | 100 a |
| 0 | 0.25 | 95 ab | 98 a |
| 1 | 0 | 89 ab | 93 ab |
| 1 | 0.25 | 76 abc | 93 ab |
| 2.5 | 0 | 74 bc | 91 ab |
| 2.5 | 0.25 | 68 c | 85 abc |
| 5 | 0 | 63 c | 71 bcd |
| 5 | 0.25 | 57 cd | 67 cd |
| 10 | 0 | 34 c | 52 de |
| 10 | 0.25 | 37 de | 50 de |

### Example 7

Percent of plants showing one or more of flower wilting, bud wilting, and drop on'Hark' Phalaenopsis orchids (in pots) sprayed with 1-MCP solutions with or without Silwet^{™} L-77 surfactant and challenged with ethylene.

| 1-MCP (mg/L) | surf (ml/L) | flower wilt, bud wilt, and/or drop (%) | | | |
|---|---|---|---|---|---|
| | | Day 0 | Day 5 | Day 10 | Day 15 |
| 0 | 0 | 0 a | 88 a | 94 a | 94 a |
| 5 | 0 | 0 a | 1.8 b | 1.8 b | 1.8 b |
| 10 | 0 | 0 a | 2.9 b | 2.9 b | 2.9 b |
| 25 | 0 | 0 a | 0 b | 0 b | 0 b |
| 50 | 0 | 0 a | 1.8 b | 1.8 b | 1.8 b |
| 50 | 0.25 | 0 a | 0 b | 0 b | 0 b |

1-MCP spray protected both closed and open buds on Phalaenopsis orchid plants.

### Example 8: Racks of Flowering Plants

Racks of flowers were sprayed with spray liquid containing 25 mg/L at rate of 200 ml/square meter. Racks were then placed into a full enclosed truck (length 7.3 meter) for 14 hours. Plants were then challenged with ethylene and evaluated 3 and 7 days later, using a rating scale from 0 (poor) to 2 (good). Control plants were treated identically_except that they did not receive the spray. Results were as follows:

| | | Day 3 | | Day 7 | |
|---|---|---|---|---|---|
| Plant | Pot size | Control | Sprayed | Control | Sprayed |
| Snapdragon (yellow) | 3.8 liter | 0.92 a | 0.83 a | 0.017 b | 0.58 a |
| Petunia "Royal Velvet" | 10.2 cm | 0.00 b | 1.00 a | 0.00 b | 0.38 a |
| Callibrachoa "Cherry Blossom" | 10.2 cm | 0.00 b | 1.00 a | 0.00 b | 1.00 a |
| Dianthus (mixed) | 15.2 cm | 0.00 b | 0.58 a | 0.00 a | 0.25 a |
| Dianthus "Ideal White" | 15.2 cm | 0.17 b | 0.92 a | 0.83 a | 1.00 a |
| Impatiens (light pink) | 3.8 liter | 0.25 b | 1.00 a | 0.42 b | 1.00 a |
| Impatiens (dark pink) | 3.8 liter | 0.42 b | 1.00 a | 0.25 b | 0.83 a |
| Impatiens (double pink) | 15.2 cm | 0.08 b | 1.00 a | 0.00 b | 0.58 a |
| Verbena "babylon Red" | 10.2 cm | 0.00 b | 0.58 a | 0.00 a | 0.19 a |

In no case was the sprayed plant worse to a statistically significant degree than the corresponding control plant. In most cases the sprayed plant was better than the corresponding control plant. Every variety showed that the sprayed plant was better than the control plant at day 3 or at day 7 or at both.

### Example 9: Shelf Life After Low-Concentration Spray

Spray liquid was EthylBloc^{™} powder (contains 0.14% by weight 1-MCP, plus alpha-cyclodextrin and dextrose, obtained from Floralife Inc.) in distilled water. The shelf lives of sprayed and non-sprayed control plants were observed, with the following results:

| | Shelf Life (days) | | |
|---|---|---|---|
| 1-MCP (mg/L) | Impatiens | New Guinea Impatiens | Geranium |
| 0 (control) | 1 | 1 | 1 |
| 0.03 | 3 | 4 | 3 |
| 0.32 | 5 | 7 | 4 |

### Example 10: Nursery Plants

A range of nursery plants that often show quality problems during shipping were chosen including Datura (tropical), Mini-rose, Delphinium (sun perennial), Verbena (sun perennial), Asclepias (sun perennial), Delosperma (groundcover), Myosotis (shade perennial) and Primula (shade perennial).

Spray liquid had 50 mg/L of 1-MCP. Sprayed and unsprayed control plants, all of which were blooming, were packed in boxes according to standard procedures and shipped under commercial conditions. After 5 days plants were unpacked and given a quality rating, from 0 (poor) to 2 (good). Results were as follows:

| | Quality Rating | |
|---|---|---|
| Plant | Control | Sprayed |
| Asclepias | 1.0 | 1.5 |
| Datura (tropical) | 1.8 | 2.0 |
| Delosperma | 0.5 | 1.3 |
| Delphinium | 0.5 | 1.0 |
| Mini-rose | 1.0 | 1.8 |
| Myosotis | 0.5 | 0.5 |
| Primula | 0.8 | 1.0 |
| Verbena | 0.5 | 0.5 |

After the above observations, the plants were placed in a greenhouse for 4 weeks and assessed again. The sprayed plants were typically larger, greener, and healthier.

## Claims

1. A method of treating ornamental plants comprising contacting said plants with a liquid composition comprising of one or more cyclopropene compound, wherein the concentration of the total of all of said one or more cyclopropene compound is 0.3 to 300 milligrams of cyclopropene compound per liter of said liquid composition.

2. The method of claim 1, wherein said ornamental plants comprise flowering plants in bloom.

3. The method of claim 1, wherein said liquid composition is an aqueous composition.

4. The method of claim 1, wherein said plants are in pots.

5. The method of claim 1, wherein said liquid composition further comprises one or more chelating agent.

6. The method of claim 1, wherein some or all of said cyclopropene compound is encapsulated by a molecular encapsulation agent.

7. The method of claim 1, wherein the concentration of the total of all of said one or more cyclopropene compound is 5 to 50 milligrams of cyclopropene compound per liter of said liquid composition.
